# EUROPÄISCHE PATENTSCHRIFT

(11) **EP 3 188 871 B1**
(45) Veröffentlichungstag und Bekanntmachung des Hinweises auf die Patenterteilung: **26.06.2019**
(21) Anmeldenummer: 15781845.1
(22) Anmeldetag: 03.09.2015
(51) Int. Cl.: B23K 9/02, B23K 9/028, B23K 10/02, B23K 15/00, B23K 35/00, B23K 35/02, B23K 26/211, B23K 26/282, F16L 13/02, B23K 101/06

(54) **SCHWEISSZUSATZ UND VERFAHREN ZUR HERSTELLUNG EINER BAUGRUPPE MITTELS EINER STOFFSCHLÜSSIGEN VERBINDUNG**
WELDING MATERIAL AND METHOD OF PRODUCING AN ASSEMBLY BY MEANS OF A BONDED CONNECTION
MATÉRIAU DE SOUDAGE ET PROCÉDÉ DE PRODUCTION D'UN ASSEMBLAGE AU MOYEN D'UNE LIAISON PAR MATIÈRE

(30) Priorität: 05.09.2014 AT 506112014
(43) Veröffentlichungstag der Anmeldung: 12.07.2017
(73) Patentinhaber: STIWA Holding GmbH, 4800 Attnang-Puchheim (AT)
(72) Erfinder: PAUDITZ, Michael, A-4690 Schwanenstadt (AT); THALER, Michael, A-4840 Vöcklabruck (AT)
(74) Vertreter: Burger, Hannes
(86) Internationale Anmeldenummer: PCT/AT2015/050210
(87) Internationale Veröffentlichungsnummer: WO 2016/033627

(56) Entgegenhaltungen:
- JP-A- S 591 064
- JP-B2- 2 510 673
- US-A- 3 076 261
- US-A- 4 346 918
- US-A- 4 728 126

## Beschreibung

Die Erfindung betrifft einen Schweißzusatz, sowie eine Schweißbauteilanordnung und ein Verfahren zur Herstellung einer Baugruppe unter Verwendung des Schweißzusatzes, wie dies in dem Oberbegriff der Ansprüche 1, 13 und 14 angegeben ist (siehe, z.B., US4 728 126 A).

Aus dem allgemeinen Stand der Technik zu Schweißverfahren ist bekannt, dass Schweißzusätze in Form von Fülldrähten, Massivdrähten, WIG-Stäben, Keramischen Badsicherungen, UP-Schweißpulver usw. der Schweißverbindung während des Schweißvorganges extern zugeführt werden. Diese Verfahren weisen den Nachteil auf, dass der Schweißzusatz während des Schweißvorganges kontinuierlich zugeführt werden muss, und die Schweißstelle somit zugänglich sein muss.

Aus der DE 10 2009 000 262 A1 ist ein Schweißverfahren bekannt, in welchem vor dem Fügen von zwei Werkstücken ein Schweißzusatz thermisch auf eines der beiden Werkstücke aufgebracht wird. Dieses Verfahren weist den Nachteil auf, dass der Schweißzusatz vor dem Schweißvorgang auf die zu fügenden Werkstücke aufgebracht werden muss, diese also für die Schweißung vorbereitet werden müssen.

Aus der US 4 728 126 A, der JP 2 510673 B2 (D2), der JP S59 1064 A, der US 4 346 918 A, der US 3056 195 A, der US 2011/09500 A1, der US 3 076 261 A und der US2010/181759 A1 sind weitere Verfahren bekannt, in welchen Schweißzusätze zum Fügen von zwei Werkstücken verwendet werden.

Aufgabe der vorliegenden Erfindung ist es einen verbesserten Schweißzusatz, sowie ein verbessertes Schweißverfahren unter Verwendung des Schweißzusatzes zu schaffen.

Diese Aufgabe der Erfindung wird durch die Merkmale gemäß Anspruch 1, sowie durch die Maßnahmen gemäß Anspruch 14 gelöst.

Um dem Sprachgebrauch der Fachsprache gerecht zu werden wird in diesem Dokument der erfindungsgemäße geformter Körper oder auch Schweißzusatzkörper im Allgemeinen als Schweißzusatz bezeichnet. Es sei unter " Schweißzusatz" ein Werkstoff verstanden, der in einem thermischen Fügeverfahren zusätzlich zu den Grundwerkstoffen bei der Herstellung einer Schweißnaht verwendet wird. Der erfindungsgemäße, in diesem Dokument als Schweißzusatzkörper bezeichnete Körper, kann unterschiedliche homogene oder inhomogene Materialzusammensetzungen aufweisen, aus unterschiedlichen Werkstoffen bestehen und unterschiedliche Formgebungen aufweisen. Ferner sei unter Bauteil das zu bearbeitende oder zu verbindende Material verstanden.

Erfindungsgemäß ist ein Schweißzusatz zur Herstellung einer Baugruppe mittels einer stoffschlüssigen Verbindung durch einen thermischen Fügevorgang ausgebildet. Durch den thermischen Fügevorgang wird die stoffschlüssige Verbindung zwischen einer ersten Fügefläche eines ersten Bauteiles und einer zweiten Fügefläche eines zweiten Bauteiles, insbesondere von metallischen Bauteilen, welche Fügeflächen durch einen zwischen diesen ausgebildeten Normalabstand voneinander distanziert angeordnet sind, hergestellt. Der Schweißzusatz ist als geformter Schweißzusatzkörper ausgebildet, der eine erste Anlagefläche aufweist, welche an die erste Fügefläche des ersten Bauteiles anlegbar ist. Weiters weißt der Schweißzusatzkörper eine zweite Anlagefläche auf, welche an die zweite Fügefläche des zweiten Bauteiles anlegbar ist. Dadurch ist mittels des Schweißzusatzkörpers der Normalabstand überbrückbar.

Ein Vorteil der erfindungsgemäßen Ausbildung liegt darin, dass der Schweißzusatzkörper unabhängig vom eigentlichen Schweißvorgang bzw. Schweißverfahren gefertigt werden kann und während des Schweißverfahrens zwischen die zu fügenden Bauteile eingebracht werden kann. Gemäß der Erfindung wird der Schweißzusatzkörper mittels Pulverspritzen und anschließendes Sintern hergestellt.

Somit ist es möglich, dass der Schweißzusatzkörper eine genaue vordefinierte Form aufweist, wodurch der Normalabstand zwischen bei Bauteilen exakt vorgebbar ist, beziehungsweise eine bestimmte Legierungsverteilung im Schweißzusatzkörper vorgebbar ist. Ein weiterer Vorteil des erfindungsgemäßen Schweißzusatzes liegt darin, dass dieser an einer unterschiedlichen Fertigungseinheit produziert werden kann und somit vom Schweißverfahren und auch von den zu schweißenden Bauteilen unabhängig vorproduziert bzw. bereitgestellt werden kann.

Weiters kann es zweckmäßig sein, die beiden Anlageflächen im Wesentlichen parallel zueinander angeordnet sind. Von Vorteil ist hierbei, dass dadurch der Abstand der beiden Anlageflächen zueinander zur Herstellung einer Stumpfnaht genau definiert ist. Somit kann der Normalabstand durch die beiden Anlageflächen bestimmt bzw. eingestellt werden. Weiters kann dadurch erreicht werden, dass bei einer Stumpfschweißverbindung und exakt bearbeiteten Fügeflächen der beiden Bauteile, die Anlageflächen jeweils nahezu spaltfrei mit den Fügeflächen zur Anlage gebracht werden können.

Ferner kann vorgesehen sein, dass eine äußere Mantelfläche des Schweißzusatzkörpers eine an eine Außenkontur zumindest einer der beiden Fügeflächen angepasste Form aufweist. Von Vorteil ist hierbei, dass der Schweißzusatzkörper dadurch so dimensioniert werden kann, dass nach dem Fügevorgang der beiden Bauteile die Schweißnaht kaum oder nicht über die Bauteile hinaussteht. Im Gegensatz zu einem mittels eines thermischen Verfahrens auf das Bauteil aufgebrachten Zusatzwerkstoffes kann beim erfindungsgemäßen Schweißzusatzkörper die Außenkontur sehr exakt nach den jeweiligen Erfordernissen hergestellt werden.

Darüber hinaus kann vorgesehen sein, dass der Schweißzusatzkörper scheiben- oder plattenförmig ausgebildet ist, wobei in einem äußeren Randabschnitt beidseitig die Anlageflächen ausgebildet sind und zumindest in einem Zentralabschnitt ein Durchbruch im Schweißzusatzkörper vorgesehen ist. Von Vorteil ist hierbei, dass ein derartiger Schweißzusatzkörper zur Verbindung von Rohren oder sonstigen Hohlprofilen, welche für einen Mediumstransport vorgesehen sind, besonders gut geeignet ist.

Vorteilhaft ist auch eine Ausprägung, gemäß welcher am Schweißzusatzkörper ein erster Positioniervorsprung vorgesehen ist, welcher zumindest die erste Anlagefläche in etwa in Normalrichtung auf die erste Anlagefläche überragt. Mittels dem ersten Positioniervorsprung kann der Schweißzusatzkörper sehr gut zu den zu fügenden Bauteilen positioniert werden. Hierbei kann vorgesehen sein, dass der Positioniervorsprung nur eine erste Anlagefläche überragt und somit zur Positionierung des Schwießzusatzkörpers am ersten Bauteil ausgebildet ist. Darüber hinaus ist es auch möglich, dass analog dazu ein zweiter Positioniervorsprung vorgesehen ist, welcher die zweite Anlagefläche in Normalrichtung auf die zweite Anlagefläche überragt und somit auch der zweite Bauteil relativ zum Schweißzusatzkörper und damit relativ zum ersten Bauteil positioniert werden kann.

Gemäß einer Weiterbildung ist es möglich, dass die äußere Mantelfläche als rotationssymmetrische Zylinderfläche ausgebildet ist. Von Vorteil ist ein derart ausgebildeter Schweißzusatzkörper bei der Verwendung zum Verschweißen von Rohren oder Rohrbauteilen.

Gemäß der Erfindung weist der Schweißzusatzkörper zumindest zwei Bereiche mit einer zueinander unterschiedlichen Materialzusammensetzung auf. Von Vorteil ist hierbei, dass beispielsweise der äußere Randabschnitt durch einen Werkstoff gebildet werden kann, welcher eine gute Schweißbarkeit aufweist und ein Innenabschnitt durch einen Werkstoff gebildet sein kann, welcher gute Wärmeleiteigenschaften aufweist. Darüber hinaus ergibt sich auch der Vorteil, dass durch gezielten Einsatz von verschiedenen Werkstoffen oder Werkstoffzusammensetzungen, der Stückpreis des Zusatzwerkstoffes niedrig gehalten werden kann, wodurch mittels des erfindungsgemäßen Zusatzwerkstoffes eine wirtschaftliche Herstellung von Bauteilen erreicht werden kann.

Darüber hinaus kann es vorteilhaft sein, dass der Schweißzusatzkörper im Bereich des äußeren Randabschnittes eine erste Materialzusammensetzung mit einer ersten Schmelztemperatur und anschließend an den äußeren Randabschnitt einen Innenabschnitt mit einer zweiten Materialzusammensetzung mit einer zweiten Schmelztemperatur aufweist, wobei die erste Schmelztemperatur bezüglich der zweiten Schmelztemperatur geringer ist. Dadurch kann erreicht werden, dass während des Schweißvorganges nur der äußere Randabschnitt des Schweißzusatzkörpers aufgeschmolzen wird, beziehungsweise jene Werkstoffschicht, welche nicht aufgeschmolzen wird niedrigere Dampfdrücke aufweist. Somit kann mittels des Innenabschnittes des Schweißzusatzkörpers der durch den Schweißzusatzkörper vorgegebene Normalabstand konstant gehalten werden.

Weiters kann vorgesehen sein, dass im Bereich des äußeren Randabschnittes in die Materialzusammensetzung ein Hilfsmittel, insbesondere ein Flussmittel, ein Beizmittel, eine Kleberschicht oder schlackenbildendes Mittel etc. eingebracht oder auf den äußeren Randabschnitt aufgebracht ist. Ein derartiges Hilfsmittel können beispielsweise auch kleine Partikel ionisch - kovalenten Bindungscharakters sein, welche zur Erleichterung der heterogenen Keimbildung in schwer schweißbare Werkstoffe beigemengt werden. Von Vorteil ist hierbei, dass ein für das Schweißverfahren notwendiges Hilfsmittel nicht zwingendermaßen extern zugeführt werden muss. Durch die Verwendung eines schlackenbildenden Mittels kann beispielsweise die Zuführung von Schutzgas für den Schweißvorgang hinfällig werden. Ist beispielsweise eine Kleberschicht am Schweißzusatzkörper aufgebracht, so kann dieser einfach an einem Bauteil positioniert werden.

Gemäß einer besonderen Ausprägung ist es möglich, dass der äußere Randabschnitt durch ein gepresstes Pulver oder mittels eines Bindemittels verbundenes Pulver gebildet ist. Von Vorteil ist hierbei, dass ein Zusatzwerkstoff, welcher normalerweise in einer pulverförmigen Form vorliegen würde bzw. vorliegt, im Schweißzusatzkörper integriert sein kann und dieser in einer festen Form vorliegt. Somit kann eine exakte Mengenverteilung eines in Pulverform vorliegenden Werkstoffes im Schweißzusatzkörper erreicht werden.

Entsprechend einer vorteilhaften Weiterbildung kann vorgesehen sein, dass der Schweißzusatzkörper in einem vom äußeren Randabschnitt distanzierten Innenabschnitt zumindest ein elastisches Federelement aufweist. Von Vorteil ist hierbei, dass das Federelement während des Fügevorganges der beiden Bauteile durch Applizierung einer Druckkraft mittels welcher die beiden Bauteile aneinander gedrückt werden, vorgespannt werden kann. Während des Schweißvorganges wird anschließend nur der äußere Randbereich des Schweißzusatzkörpers aufgeschmolzen und das elastische Federelement in seiner Form nicht verändert. Somit kann erreicht werden, dass nach dem Aushärten der Schweißnaht die zuvor auf die beiden Bauteile applizierte Druckkraft wieder entfernt werden kann. Durch die Vorspannung des Federelementes wird dadurch eine gewisse Spannung in der Schweißnaht appliziert. Diese innere Spannung kann vorteilhaft sein um die Festigkeit der Schweißnaht zu erhöhen.

Insbesondere kann es vorteilhaft sein, dass das zumindest eine Federelement lamellenförmig oder gewellt ausgebildet ist. Von Vorteil ist hierbei, dass ein lamellenförmig oder gewellt ausgebildetes Federelement einfach im Fertigungsverfahren zur Herstellung des Schweißzusatzkörpers herzustellen ist. Außerdem kann durch die Lamellenform erreicht werden, dass vom Federelement eine hohe Kraft zwischen dem ersten und dem zweiten Bauteil aufgebracht werden kann und somit eine erhöhte Vorspannung in der Schweißnaht erreicht werden kann.

Gemäß einer Weiterbildung ist es möglich, dass an der äußeren Mantelfläche zumindest ein nach außen abstehender Haltezapfen angeordnet ist. Von Vorteil ist hierbei, dass der Schweißzusatzkörper mittels dem Haltezapfen, beispielsweise von einem Fertigungsroboter oder einer sonstigen Greifvorrichtung, zwischen den Bauteilen positioniert werden kann. Hierbei kann vorgesehen sein, dass im Zuge des Schweißvorganges der Haltezapfen anschließend aufgeschmolzen wird, sodass dieser an der fertigen Schweißnaht nicht mehr sichtbar ist.

Gemäß der Erfindung sind an zumindest einer der Anlageflächen Kühlkanäle ausgebildet. Von Vorteil ist hierbei, dass durch Kühlkanäle eine übermäßige lokale Wärmebildung vermieden werden kann. Somit kann einerseits die eingebrachte Wärmemenge besser in den beiden zu fügenden Bauteilen verteilt werden und andererseits kann nach Beendigung des Schweißvorganges die angestaute Wärmemenge besser abgeführt werden, sodass es zu einer schnelleren Abkühlung der Schweißstelle kommt.

Beim Verfahren zur Herstellung einer Baugruppe mittels eines thermischen Fügevorgangs zum Ausbilden einer stoffschlüssigen Verbindung zwischen einer ersten Fügefläche eines ersten Bauteiles und einer zweiten Fügefläche eines zweiten Bauteiles, insbesondere von metallischen Bauteilen, ist vorgesehen, dass dieses folgende Verfahrensschritte aufweist:
- Bereitstellen des ersten Bauteiles;
- Bereitstellen eines als geformter Schweißzusatzkörper ausgebildeten Schweißzusatzes mit einer ersten und einer zweiten Anlagefläche;
- Positionieren des Schweißzusatzkörpers, wobei die erste Anlagefläche des Schweißzusatzkörpers mit der ersten Fügefläche des ersten Bauteiles zur Anlage gebracht wird;
- Positionieren des zweiten Bauteiles relativ bezüglich des ersten Bauteils, wobei die zweite Fügefläche des zweiten Bauteiles mit der zweiten Anlagefläche des Schweißzusatzkörpers zur Anlage gebracht wird;
- Durchführen des Schweißvorgangs mit zumindest teilweisem Aufschmelzen des ersten Bauteils, des Schweißzusatzkörpers und des zweiten Bauteils durch Einbringen von Wärmeenergie und bilden einer Schweißnaht.

Von Vorteil an dem erfindungsgemäßen thermischen Fügeverfahren ist, dass der Schweißzusatz in Form des Schweißzusatzkörpers zugeführt werden kann. Dieser kann unabhängig von den beiden Bauteilen, gefertigt werden und im Fügeverfahren zur Verfügung gestellt werden. Im Gegensatz zur Beschichtung eines Bauteiles ist es hier auch nicht notwendig, dass die zu verbindenden Bauteile vor dem Fügevorgang behandelt werden. Somit kann insbesondere in einer Serienfertigung die Durchlaufzeit erhöht werden, da der Schweißzusatzkörper ausgelagert produziert und somit jederzeit bereitgestellt werden kann. Ein weiterer Vorteil des erfindungsgemäßen Verfahrens liegt darin, dass entweder gar kein weiterer Schweißzusatz während des Schweißverfahrens zugeführt werden muss, oder wenigstens auf einen Teil dieses zuzuführenden Schweißzusatzes verzichtet werden kann, da der Schweißzusatz zumindest teilweise in Form des Schweißzusatzkörpers zwischen die Fügeflächen der beiden zu verbindenden Bauteile eingebracht ist. Der eigentliche Schweißvorgang kann ohne komplizierte Zuführungen von Zusatzwerkstoffen auf Standardanlagen stattfinden. Ein weiterer Vorteil des erfindungsgemäßen Verfahrens liegt darin, dass die Dosierung von Legierungselementen in der Schweißnaht durch die geometrischen Abmessungen des Schweißzusatzkörpers sowie dessen Zusammensetzung sehr genau eingestellt werden kann. Diese Dosierung bleibt auch bei Geschwindigkeitsänderungen während des Schweißverfahrens konstant, wohingegen gemäß des Standes der Technik eine Draht oder Pulverzufuhr an die Schweißgeschwindigkeit angepasst werden muss. Dies kann im Bereich von Beschleunigungsstrecken Probleme bereiten.

Weiters kann vorgesehen sein, dass die beiden Bauteile vor und/oder während des Schweißvorgangs mit einer gegeneinander gerichteten Druckkraft beaufschlagt und somit aneinander angedrückt werden. Von Vorteil ist hierbei, dass der Schweißzusatzkörper mit einer vordefinierten Kraft zwischen den beiden zu verbindenden Bauteilen gespannt werden kann. Somit kann der Druck, welcher auf die Fügeflächen wirkt, voreingestellt werden und an die Erfordernisse der Schweißnaht angepasst werden. Wird ein Schweißzusatzkörper verwendet, an welchem ein Federelement ausgebildet ist, so kann durch die Druckkraft das Federelement vorgespannt werden, und nach dem Schweißvorgang im Federelement gespeichert werden, sodass es zu inneren Spannungen im Bereich der Schweißstelle der beiden Bauteile kommt.

Gemäß einer Weiterbildung ist es möglich, dass die Wärmeenergie mittels eines Schweißkopfes, insbesondere durch Laserschweißen, Plasmaschweißen, Lichtbogenschweißen, Gasschmelzschweißen, defokussiertem Elektronenstrahlschweißen, usw. eingebracht wird. Von Vorteil ist hierbei, dass durch externes Einbringen der Wärmeenergie erreicht werden kann, dass beispielsweise nur ein äußerer Randbereich des Schweißzusatzkörpers aufgeschmolzen wird. Dadurch kann weiters erreicht werden, dass die Wärmeenergie gezielt und lokal eingebracht werden kann, um eine gewünschte Form der Schweißnaht zu erreichen.

Entsprechend einer vorteilhaften Weiterbildung kann vorgesehen sein, dass die eingebrachte Wärmeenergie dermaßen bemessen wird, dass während des Schweißvorganges nur ein äußerer Randbereich des Schweißzusatzkörpers, sowie die jeweils an den äußeren Randbereich angrenzenden Teilabschnitte der beiden Bauteile aufgeschmolzen wird. Von Vorteil ist hierbei, dass ein innerer Bereich des Schweißzusatzkörpers nicht aufgeschmolzen wird und somit der Normalabstand bzw. der Abstand der beiden Bauteile zueinander gewahrt werden kann. Somit ist es möglich, dass die hergestellte Baugruppe eine möglichst hohe Genauigkeit aufweist. Weiters kann dadurch erreicht werden, dass beispielsweise bei Einsatz eines Schweißzusatzkörpers mit einem elastischen Federelement im Innenabschnitt, dieses Federelement nicht aufgeschmolzen wird und somit seine Form wahren kann, wodurch die eingestellte Vorspannung während des Schweißvorganges nicht verloren geht.

Insbesondere kann es vorteilhaft sein, wenn die beiden Fügeflächen der Bauteile mit einem zueinander in etwa gleichen Querschnitt ausgebildet werden und unter Ausbildung eines Normalabstandes, welcher von dem Schweißzusatzkörper überbrückt wird, in Form eines Stumpfstoßes benachbart nebeneinander angeordnet werden. Besonders bei der Ausbildung eines Stumpfstoßes bringt der erfindungsgemäße Schweißzusatzkörper die aufgezählten Vorteile mit sich. Ideal ist dies beispielsweise bei der Herstellung von miteinander verschweißten Hohlprofilen, wie etwa Rohren, oder aber auch beim Verschweißen von wellenförmigen Bauteilen.

Zum besseren Verständnis der Erfindung wird diese anhand der nachfolgenden Figuren näher erläutert.

Es zeigen jeweils in stark vereinfachter, schematischer Darstellung:
- Fig. 1: eine Schnittdarstellung einer in Explosionsansicht dargestellten Schweißbauteilanordnung;
- Fig. 2: eine Schnittdarstellung einer weiteren zusammengefügten Schweißbauteilanordnung;
- Fig. 3: eine Schnittdarstellung einer weiteren zu einer Baugruppe verschweißten Schweißbauteilanordnung;
- Fig. 4: eine Schnittdarstellung eines Ausführungsbeispiels eines Schweißzusatzkörpers;
- Fig. 5: eine Schnittdarstellung einer Schweißbauteilanordnung mit lamellenförmigen Federelement im Schweißbauteilkörper;
- Fig. 6: eine Schnittdarstellung einer Schweißbauteilanordnung mit gestanztem Federelement im Schweißbauteilkörper;
- Fig. 7: eine Vorderansicht einer Schweißbauteilanordnung mit Schweißzusatzkörper in Lamellenform;
- Fig. 8: eine perspektivische Ansicht einer Schweißbauteilanordnung mit Bauteilen ein Form von Hohlprofilen;
- Fig. 9: eine perspektivische Ansicht einer Schweißbauteilanordnung mit Bauteilen ein Form von Rechteckprofilen;
- Fig. 10: eine Schnittdarstellung einer Schweißbauteilanordnung mit einem Schweißzusatzkörper mit unterschiedlichen Materialzusammensetzungen;
- Fig. 11: eine Schnittdarstellung einer Schweißbauteilanordnung mit einem Schweißzusatzkörper mit winkelig angeordneten Anlageflächen;
- Fig. 12: eine Schnittdarstellung einer Schweißbauteilanordnung mit flachen Blechwerkstücken in einem T-Stoß;
- Fig. 13: eine Schnittdarstellung einer Schweißbauteilanordnung mit einem Schweißzusatzkörper zur Verwendung in einem Widerstandsschweißverfahren.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

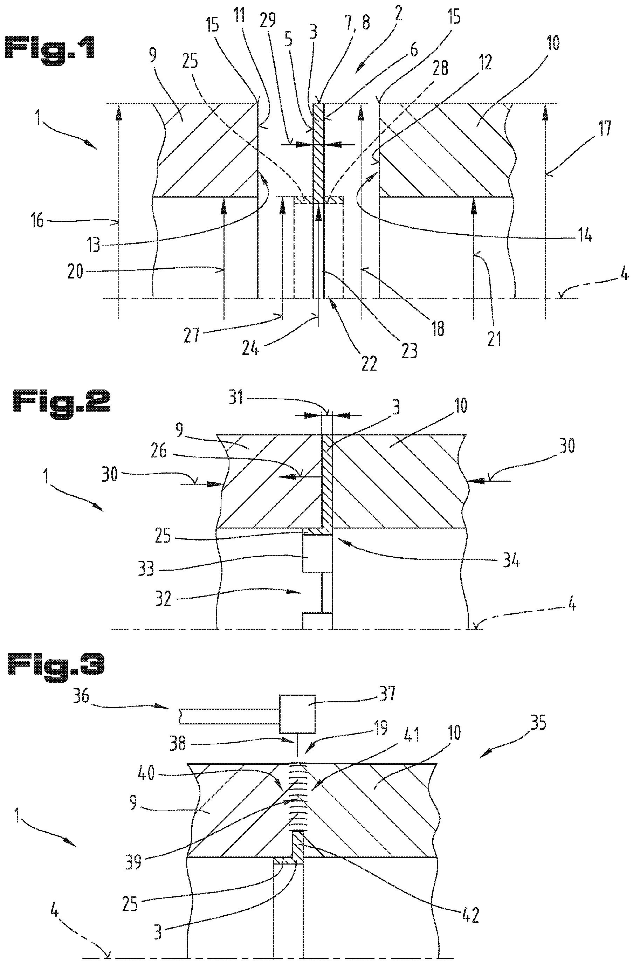

Fig. 1 zeigt eine Schnittansicht einer Schweißbauteilanordnung 1, wobei die Einzelteile dieser, welche in eine Explosionsdarstellung auseinander gezogen sind, in einem Halbschnitt dargestellt sind. Insbesondere ist ein Schweißzusatz 2 zur Herstellung der Schweißverbindung vorgesehen, welcher als Schweißzusatzkörper 3 geformt ist und somit eine definierte, exakte und reproduzierbare Form aufweist.

In der Variante nach Fig. 1 ist der Schweißzusatzkörper 3 als rotationssymmetrischer Bauteil ausgebildet, welcher eine Mittelachse 4 aufweist. Die Schnittführung wurde entlang dieser Mittelachse 4 gewählt. Der Einfachheit halber ist in der Ansicht nach Fig. 1 nur ein Viertel der rotationssymmetrischen Körper dargestellt, wobei die Mittelachse 4 als Darstellungsgrenze herangezogen wurde.

Wie aus Fig. 1 ersichtlich, weist der Schweißzusatzkörper 3 eine erste Anlagefläche 5 und eine zweite Anlagefläche 6 auf. Die beiden Anlageflächen 5, 6 sind an dessen Außenseite durch eine äußere Mantelfläche 7 begrenzt. In der dargestellten Variante, in welcher der Schweißzusatzkörper 3 als rotationssymmetrischer Körper ausgebildet ist, ist die äußere Mantelfläche 7 in Form einer Zylinderfläche 8 ausgebildet.

Weiters sind in der Schnittdarstellung nach Fig. 1 ein erstes Bauteil 9 sowie ein zweites Bauteil 10 ersichtlich, welche unter Zuhilfenahme des Schweißzusatzes 2 in einem Schweißvorgang gefügt werden sollen. Das erste Bauteil 9 weist eine erste Fügefläche 11 auf, welche während des Fügevorganges mit der ersten Anlagefläche 5 des Schweißzusatzkörpers 3 zur Anlage gebracht wird. Das zweite Bauteil 10 weist eine zweite Fügefläche 12 auf, welche während des Fügevorganges mit der zweiten Anlagefläche 6 des Schweißzusatzkörpers 3 in Anlage gebracht wird.

Die beiden Bauteile 9, 10 sind vorzugsweise aus einem metallischen Werkstoff gebildet und weisen vorzugsweise dieselbe Legierungszusammensetzung oder Materialzusammensetzung auf. In Einzelfällen kann es aus möglich sein, dass die beiden Bauteile 9, 10 eine unterschiedliche Legierungszusammensetzung aufweisen.

In der dargestellten Variante aus Fig. 1 sind der Querschnitt 13 der ersten Fügefläche 11 und der Querschnitt 14 der zweiten Fügefläche 12 gleich groß gewählt bzw. ausgeführt. Aufgrund der Tatsache, dass in der dargestellten Variante das erste Bauteil 9 sowie das zweite Bauteil 10 rotationssymmetrisch bezüglich der Mittelachse 4 ausgebildet sind, sind die Querschnitte 13, 14 der beiden Fügeflächen 11, 12 in Form eines Kreisringes ausgebildet.

Wie aus Fig. 1 weiters ersichtlich, ist die äußere Mantelfläche 7 des Schweißzusatzkörpers 3 an eine Außenkontur 15 der beiden Fügeflächen 11, 12 angepasst. Hierbei kann vorgesehen sein, dass ein Außendurchmesser 16 des ersten Bauteils 9 und ein Außendurchmesser 17 des zweiten Bauteiles 10 gleich groß gewählt sind. Weiters kann vorgesehen sein, dass ein Außendurchmesser 18 des Schweißzusatzkörpers 3 ebenfalls gleich groß gewählt ist wie die beiden Außendurchmesser 16, 17 der beiden Bauteile 9, 10. Dadurch kann erreicht werden, dass nach der Beendigung des Schweißvorganges eine schöne, und gleichmäßige Schweißnaht 19 ausgebildet ist, welche radial möglichst nicht oder nur geringfügig gegenüber den Außendurchmessern 16, 17 des ersten und des zweiten Bauteiles 9, 10 vorsteht. In weiteren Varianten kann es auch zweckmäßig sein, dass der Außendruchmesser 18 des Schweißzusatzkörpers 3 kleiner bzw. größer gewählt wird als die vergleichbaren Außendurchmesser 16, 17 des ersten und des zweiten Bauteils 9, 10. Von Vorteil ist hierbei, dass dadurch ein Materialschwund bzw. eine mögliche Materialexpansion während des Schweißvorganges ausgeglichen werden kann. Somit kann erreicht werden, dass die Schweißnaht 19 bei verschiedenen möglichen Kombinationen von verschiedenen Werkstoffen der Bauteile 9, 10 bzw. des Schweißzusatzes 2 immer eine schöne und gleichmäßige Form aufweist.

Wie aus Fig. 1 weiters ersichtlich, kann vorgesehen sein, dass die Bauteile 9, 10 als rotationssymmetrische Hohlkörper, etwa als Rohre, ausgebildet sind. Hierbei weisen die Bauteile 9, 10 einen Innendurchmesser 20, 21 auf. Derartige Rohre können beispielsweise als Transporteinhausungen für Fluide oder sonstiges verwendet werden.

Um auch den Schweißzusatzkörper 3 für derartige Fluide durchgängig zu machen, kann vorgesehen sein, dass in einem Zentralabschnitt 22 des Schweißzusatzkörpers 3 ein Durchbruch 23 vorgesehen ist, welcher in dessen Innendurchmesser 24 in etwa an die Innendurchmesser 20, 21 des ersten und des zweiten Bauteiles 9, 10 angepasst ist.

Weiters kann, wie aus Fig. 1 ersichtlich, vorgesehen sein, dass am Schweißzusatzkörper 3 ein erster Positioniervorsprung 25 angeordnet ist, welcher in einer Normalrichtung 26 gegenüber der ersten Anlagefläche 5 vorstehend angeordnet ist. Dieser erste Positioniervorsprung 25 kann dazu dienen, um den Schweißzusatzkörper 3 während des Fügevorganges exakt am ersten Bauteil 8 positionieren zu können. Hierzu kann vorgesehen sein, dass ein Außendurchmesser 27 des ersten Positioniervorsprunges 25 in etwa gleich groß gewählt ist, wie der Innendurchmesser 20 des ersten Bauteiles 9. Vorzugsweise wird hier eine Übergangspassung gewählt, sodass der Schweißzusatzkörper 3 exakt positioniert werden kann und gegebenenfalls auch verrutschsicher im ersten Bauteil 9 aufgenommen ist.

Analog zum bereits beschriebenen ersten Positioniervorsprung 25 kann vorgesehen sein, dass ein zweiter Positioniervorsprung 28 ausgebildet ist, welcher gegenüber der zweiten Fügefläche 12 vorstehend angeordnet ist und somit zur Positionierung des zweiten Bauteiles 10 dient.

Weiters ist es auch möglich, dass der erste Positioniervorsprung 25 bzw. der zweite Positioniervorsprung 28 eine konische Außenoberfläche aufweisen, wodurch die Positioniereigenschaft gegenüber dem ersten Bauteil 9 bzw. dem zweiten Bauteil 10 verbessert wird.

Eine Dicke 29 des Schweißzusatzkörpers 3 wird durch den Normalabstand der beiden Anlageflächen 5, 6 zueinander definiert. Die Dicke 29 des Schweißzusatzkörpers 3 ist maßgeblich für die Parameter der Schweißnaht 19 und beträgt vorzugsweise in etwa zwischen 0,5 und 5 mm.

Fig. 2 zeigt eine weitere Variante der Schweißbauteilanordnung 1, insbesondere die beiden Bauteile 9, 10 sowie den Schweißzusatzkörper 3 in einer Schnittdarstellung gemäß Fig. 1. In der Ansicht nach Fig. 2 sind die beiden Bauteile 9, 10 mit dem Schweißzusatzkörper 3 zusammengefügt sind und liegen an diesem an. Dieser Zustand bzw. Positionierung der Schweißbauteilanordnung 1 bildet die Basis für den Start des Schweißvorganges.

Beim Fügen der einzelnen Bauteile zueinander kann vorgesehen sein, dass das erste Bauteil 9 bereitgestellt wird, beispielsweise von einer Haltevorrichtung gehaltert wird. Weiters kann vorgesehen sein, dass der Schweißzusatzkörper 3 mittels einer Manipulationseinheit, etwa einem Roboter, am ersten Bauteil 9 appliziert wird bzw. relativ zum ersten Bauteil 9 positioniert wird. Um diese Positionierung des Schweißzusatzkörpers 3 relativ zum ersten Bauteil 9 zu erleichtern, kann der erste Positioniervorsprung 25 am Schweißzusatzkörper 3 angeordnet sein, welcher mit dem ersten Bauteil 9 zusammenwirkt. Weiters kann vorgesehen sein, dass anschließend das zweite Bauteil 10 relativ zum ersten Bauteil 9 bzw. relativ zum Schweißzusatzkörper 3 positioniert bzw. am Schweißzusatzkörper 3 angelegt wird.

Natürlich kann auch vorgesehen sein, dass sowohl die beiden Bauteile 9, 10 als auch der Schweißzusatzkörper 3 von derselben Manipulationseinheit bzw. Haltevorrichtung positioniert bzw. gehalten werden.

Weiters kann vorgesehen sein, dass sowohl auf den ersten Bauteil 9 als auch auf den zweiten Bauteil 10 eine Druckkraft 30 appliziert wird, welche beiden Druckkräfte 30 aufeinander zugerichtet sind, sodass die beiden Bauteile 9, 10 aufeinander zugedrückt werden. Somit können die beiden Bauteile 9, 10 an den zwischenliegenden Schweißzusatzkörper 3, insbesondere an dessen Anlageflächen 5, 6 angepresst werden. Wie aus Fig. 2 ersichtlich, wird durch den Schweißzusatzkörper 3 ein Normalabstand 31 hergestellt, in welchem die erste Fügefläche 11 des ersten Bauteiles 9 und die zweite Fügefläche 12 des zweiten Bauteiles 10 voneinander beabstandet sind. Hierbei ist aufgrund der Geometrie des Schweißzusatzkörpers 3, der Normalabstand 31 gleich groß wie die Dicke 29 des Schweißzusatzkörpers 3.

Im Gegensatz zur Darstellung aus Fig. 1 wird in Fig. 2 ein Schweißzusatzkörper 3 verwendet, welcher nur einen ersten Positioniervorsprung 25 aufweist. Hierbei kann vorgesehen sein, dass der erste Positioniervorsprung 25 nicht wie in Fig. 1 durch einen umlaufenden Ringmantel gebildet wird, sondern eine oder mehrere Ausnehmungen 32 aufweist, wodurch eine oder mehrere Klauen 33 ausgebildet sind. Hierdurch kann sich die klauenkupplungähnliche Form ergeben, wie sie in Fig. 2 dargestellt ist.

Sind das erste Bauteil 9 bzw. das zweite Bauteil 10, wie aus Fig. 2 ersichtlich, in Form eines Hohlprofiles ausgebildet und werden stirnseitig aneinander gedrückt, so bilden sie, wie aus Fig. 2 gut ersichtlich, einen Stumpfstoß 34, an welchem die Schweißnaht 19 gebildet wird.

Fig. 3 zeigt eine weitere Variante der Schweißbauteilanordnung 1, insbesondere die beiden Bauteile 9, 10 sowie den Schweißzusatzkörper 3 in einer Schnittdarstellung gemäß Fig. 1. Die beiden Bauteile 9, 10 bzw. der Schweißzusatzkörper 3 sind in Fig. 3 in einem verschweißten Zustand dargestellt und bilden somit eine Baugruppe 35 aus. In der der Variante nach Fig. 3 eingesetzte Schweißzusatzkörper 3 weist einen ersten Positioniervorsprung 25 in Form eines umlaufenden Kreisringes auf.

Wie aus Fig. 3 ersichtlich, kann vorgesehen sein, dass eine Schweißvorrichtung 36 ausgebildet ist, welche zum Verschweißen der Schweißbauteilanordnung 1 dient und einen Schweißkopf 37 umfasst. Vom Schweißkopf 37 kann ein Energiestrahl 38 abgegeben werden, welche die nötige Wärmemenge für die Verschweißung in die beiden Bauteile 9, 10 bzw. in dem Schweißzusatzkörper 3 einbringt. Der Energiestrahl 38 kann je nach gewähltem Schweißverfahren durch unterschiedliche Medien gebildet werden.

Mögliche Schweißverfahren, in welchen der Einsatz des erfindungsgemäßen Schweißzusatzkörpers als besonders vorteilhaft erscheint sind beispielsweise das Laserschweißen, das Elektronenstrahlschweißen, das Plasmaschweißen und hier im speziellen Plasma-Stichlochschweißen, Gasschmelzschweißen, defokussiertem Elektronenstrahlschweißen, und dergleichen.

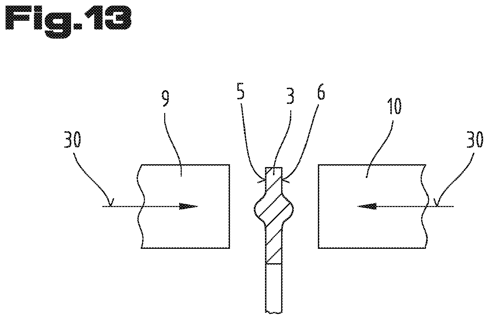

Weiters ist es auch denkbar, dass Widerstandsschweißverfahren, wie etwa das Kondensatorimpulsschweißen oder auch Kondensatorentladungsschweißen eingesetzt werden. Die Ausgestaltung eines Schweißzusatzkörpers 3, welcher bei diesen Schweißverfahren verwendet werden kann ist in Fig. 13 dargestellt.

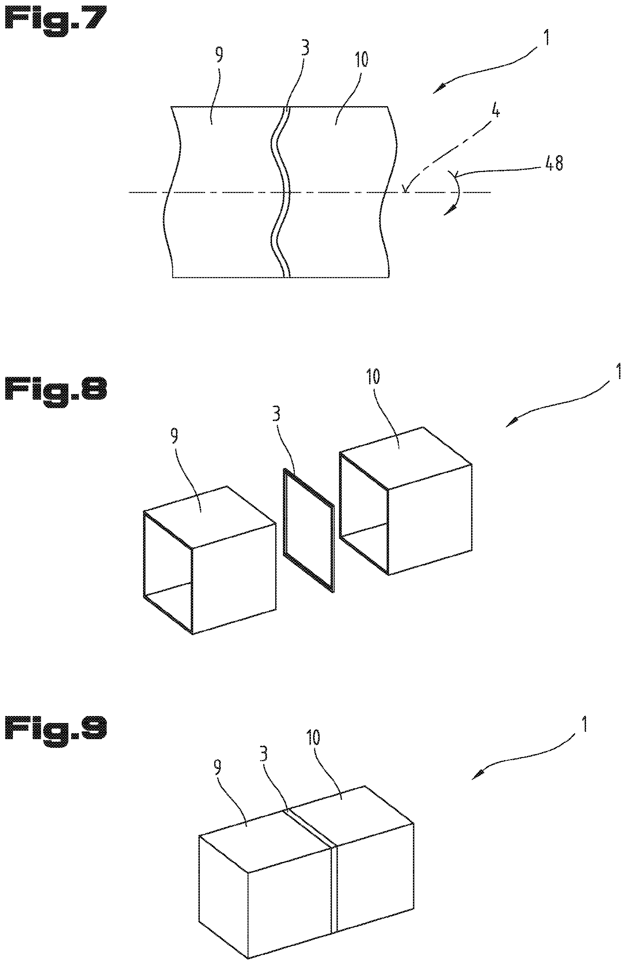

Während des Schweißvorganges kann vorgesehen sein, dass entweder der Schweißkopf 37 relativ zur Baugruppe 35 bewegt wird und diese stillsteht, oder dass der Schweißkopf 37 stillsteht und die Baugruppe 35 bewegt wird. Beispielsweise kann die Baugruppe 35 während des Schweißvorganges um die Mittelachse 4 rotiert werden. Alternativ dazu kann auch vorgesehen sein, dass sowohl der Schweißkopf 37 als auch die Baugruppe 35 während des Schweißvorganges bewegt wird. Dies kann etwa notwendig sein zur Herstellung einer Baugruppe 35 mit einem lamellenförmigen Schweißzusatzkörper 3, wie sie in Fig. 7 gezeigt bzw. beschrieben ist.

Wie aus Fig. 3 weiters ersichtlich, kann vorgesehen sein, dass die Energieeinbringung durch den Schweißkopf 37 dermaßen dosiert bzw. gewählt ist, dass nur ein äußerer Randabschnitt 39 des Schweißzusatzkörpers 3 bzw. daran anschließend ein erster Teilabschnitt 40 des ersten Bauteiles 9 und ein zweiter Teilabschnitt 41 des zweiten Bauteiles 10 aufgeschmolzen wird. Dadurch kann erreicht werden, dass ein Innenabschnitt 42 des Schweißzusatzkörpers 3 nicht aufgeschmolzen wird und somit formstabil bleibt, wodurch dieser während des Schweißvorganges einen zumindest annähernd konstanten Normalabstand 31 aufrecht erhalten kann. Dieser Normalabstand 31 wird selbst bei Veränderung der Druckkraft 30 nicht verändert. Der Normalabstand 31 kann sich jedoch geringfügig dadurch verändern, dass es aufgrund von Temperaturveränderungen zu Wärmedehnungen im Schweißzusatzkörper 3 bzw. in den Bauteilen 9, 10 kommt.

Alternativ dazu kann natürlich auch vorgesehen sein, dass der Schweißzusatzkörper 3 während des Schweißvorganges zur Gänze aufgeschmolzen wird und somit eine homogene Materialverbindung mit den beiden Bauteilen 9, 10 bildet.

In wieder einer anderen Ausführungsvariante kann auch vorgesehen sein, dass der Schweißkopf 37 im inneren der Bauteile 9, 10 für die nötige Energieeinbringung sorgt um die Schweißnaht 19 von zwei Seiten oder etwa nur durch Energieeinbringung auf der Innenseite herstellen zu können. Weiters kann auch vorgesehen sein, dass aus Platzgründen der Schweißkopf 37 außerhalb der beiden Bauteilen 9, 10 platziert ist und die Energiestrahl, etwa ein Laserstrahl über Spiegelelemente umgelenkt wird.

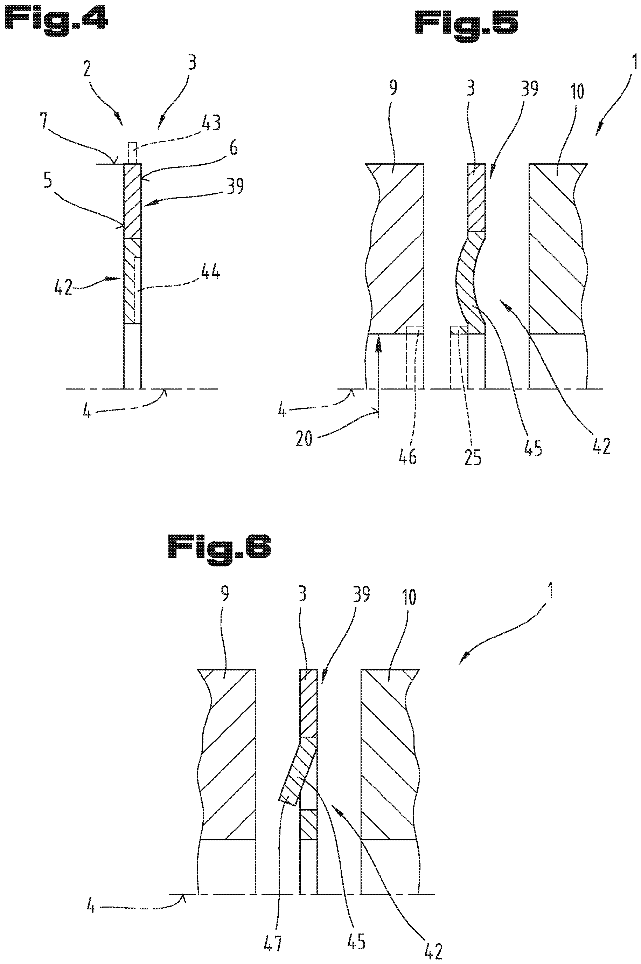

Fig. 4 zeigt ein Ausführungsbeispiel eines Schweißzusatzkörpers 3 gemäß einer Schnittdarstellung nach Fig. 1. Wie in diesem Ausführungsbeispiel dargestellt, ist gemäß der Erfindung vorgesehen, dass der Schweißzusatzkörper 3 im äußeren Randabschnitt 39 eine erste Materialzusammensetzung aufweist und im Innenabschnitt 42 eine zweite Materialzusammensetzung aufweist. Dies bringt mit sich den Vorteil dass in der ersten Materialzusammensetzung des äußeren Randabschnittes 39 eine Verteilung von Legierungselementen verwendet werden kann, welche bezüglich der Verteilung von Legierungselementen in der zweiten Materialzusammensetzung des Innenabschnittes 42 unterschiedlich ist. Weiters kann vorgesehen sein, dass die beiden Materialzusammensetzungen verschiedene Schmelztemperaturen aufweisen, wodurch erreicht werden kann, dass erreichen einer gleichen Temperatur durch große Wärmemengeneinbringung beispielsweise nur der äußere Randabschnitt 39 aufgeschmolzen wird.

Weiters und unabhängig von der Materialzusammensetzung kann vorgesehen sein, dass an der äußeren Mantelfläche 7 des Schweißzusatzkörpers 3 ein Haltezapfen 43 angeordnet ist, welcher in Fig. 4 schematisch dargestellt ist. Dieser Haltezapfen 43 kann dazu dienen, um den Schweißzusatzkörper 3 halten bzw. manipulieren zu können.

Gemäß der Erfindung ist vorgesehen, dass im Schweißzusatzkörper 3 ein oder mehrere Kühlkanäle 44 ausgebildet sind, welche zur Wärmeverteilung bzw. zur Wärmeleitung im Schweißzusatzkörper 3 dienen. Diese Kühlkanäle 44 können entweder im Bereich der beiden Anlageflächen 5, 6, insbesondere im äußeren Randabschnitt 39 ausgebildet sein. Weiters ist es auch möglich, dass die Kühlkanäle 44 im Innenabschnitt 42 ausgebildet sind.

Fig. 5 zeigt eine weitere Variante eines Schweißbauteilanordnung 1 gemäß einer Schnittdarstellung nach Fig. 1. In dieser weiteren Variante, ist im Schweißzusatzkörper 3 ein elastisches Federelement 45 ausgebildet. Das Federelement 45 kann beispielsweise im Innenabschnitt 42 ausgebildet sein, wobei es, wie aus Fig. 5 ersichtlich, durch Materialverformung oder Formgebung in Form einer Ausbauchung oder etwa in Lamellenform bzw. in Wellenform ausgeformt sein kann. Dadurch kann erreicht werden, dass beim Aneinanderfügen der beiden Bauteile 9, 10 eine gewisse Vorspannkraft appliziert wird. Bei einem Verschweißvorgang wird nur der äußere Randabschnitt 39 mit den beiden Bauteilen 9, 10 verschmolzen und der Innenabschnitt 42, welcher als Federelement 45 ausgebildet ist, wird nicht aufgeschmolzen. Dadurch kann die durch das Federelement 45 aufgebrachte Vorspannung zwischen den beiden Bauteilen 9, 10 auch nach Beendigung des Schweißvorganges aufrecht gehalten, beziehungsweise gespeichert werden.

Wie aus Fig. 5 weiters ersichtlich, kann vorgesehen sein, dass zumindest am ersten Bauteil 9 eine Ausnehmung 46 vorgesehen ist, in welche der Positioniervorsprung 25 des Schweißzusatzkörpers 3 eingebracht werden kann. Dadurch kann erreicht werden, dass der Schweißzusatzkörper 3 gegenüber dem Innendurchmesser 20 des ersten Bauteils 9 nicht nach innen vorsteht und somit auch nach dem Verschweißen der gesamte Innenraum zur Durchströmung von einem Fluid zur Verfügung steht.

Fig. 6 zeigt eine weitere Variante einer Schweißbauteilanordnung 1 gemäß einer Schnittdarstellung nach Fig. 1, wobei in dieser weiteren Variante das Federelement 45 durch einen mechanischen Bearbeitungsvorgang, wie etwa einem Stanzvorgang, hergestellt wurde. Dadurch können mehrere Laschen 47 ausgebildet sein, welche eine mögliche Vorspannkraft aufbringen können.

Fig. 7 zeigt in einer Vorderansicht weiterer Variante einer Schweißbauteilanordnung 1 gemäß einer Schnittdarstellung nach Fig. 1, wobei bei dieser weiteren Variante der Schweißzusatzkörper 3 bzw. die Fügeflächen 11, 12 der beiden Bauteile 9, 10 lamellenförmig ausgebildet sind und wie in Fig. 7 dargestellt aneinander gefügt werden. Die Bauteile 9, 10 können hierbei die Außenform einer Welle oder einer Hohlwelle, etwa eines Rohres aufweisen. Die Lamellenform kann besonders vorteilhaft sein, wenn zwei Bauteile 9, 10 miteinander verbunden werden, welche zum Übertragen eines Torsionsmomentes ausgebildet bzw. angedacht sind.

Fig. 8 zeigt eine weitere Variante einer Schweißbauteilanordnung 1 in einer perspektivischen Ansicht, wobei die zwei Bauteile 9, 10 in Form von Hohlprofilen ausgebildet sind. Aus Fig. 8 ist ersichtlich, dass hierbei vorgesehen sein kann, dass der Schweißzusatzkörper 3 ebenfalls eine hohlprofilähnliche Form aufweisen kann.

Fig. 9 zeigt eine weitere Variante einer Schweißbauteilanordnung 1 in einer perspektivischen Ansicht, wobei die zwei Bauteile 9, 10 in Form von Rechteckprofilstählen ausgebildet sind.

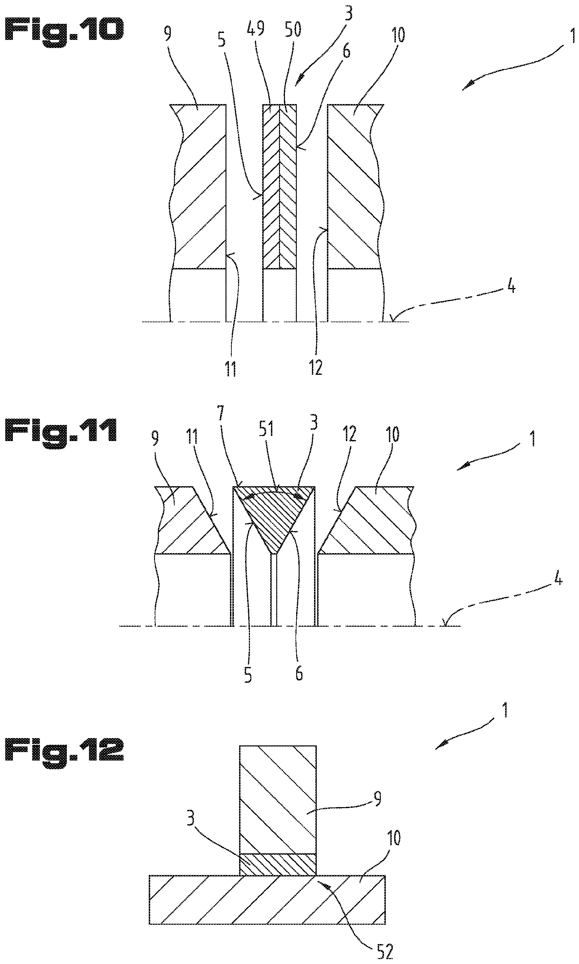

Fig. 10 zeigt eine weitere Variante einer Schweißbauteilanordnung 1, wobei vorgesehen sein kann, dass der Schweißzusatzkörper 3 im Bereich der ersten Anlagefläche 5 einen ersten Anlageflächenabschnitt 49 aufweist, welcher eine erste Materialzusammensetzung aufweist, und im Bereich der zweiten Anlagefläche 6 einen zweiten Anlageflächenabschnitt 50 aufweist, welcher eine zweite Materialzusammensetzung besitzt. Dies kann vorteilhaft sein, wenn beispielsweise ein erster Bauteil 9 und ein zweiter Bauteil 10 miteinander verschweißt werden sollen, welche eine unterschiedliche Materialzusammensetzung bzw. unterschiedliche Legierungskomponenten aufweisen. Dadurch kann erreicht werden, dass im aufgeschmolzenen Zustand der erste Anlageflächenabschnitt 49 besonders gut mit dem ersten Bauteil 9 einer ersten Legierung verbindet und der zweite Anlageflächenabschnitt 50 besonders gut mit einem zweiten Bauteil 10 mit einer zweiten Legierung verbindet.

Fig. 11 zeigt eine weitere Variante einer Schweißbauteilanordnung 1. Wie aus Fig. 11 ersichtlich, kann vorgesehen sein, dass der Schweißzusatzkörper 3 nicht zwei parallel zueinander ausgerichtete Anlageflächen 5, 6 aufweist, sondern dass diese in einem Winkel 51 zueinander angeordnet sind. Somit kann erreicht werden, dass eine Art V-Naht ausgebildet werden kann, wobei außen durch größeren Wärmeeintrag eine breitere Schweißnaht 19 erzeugt werden kann, wie an der Wurzel oder Innenseite.

Fig. 12 zeigt eine weitere Variante, in welcher das erste Bauteil 9 und das zweite Bauteil 10 jeweils als Flacherzeugnis ausgebildet sind und in einem T-Stoß 52 aneinander gefügt sind. Auch hier ist der Schweißzusatzkörper 3 vorgefomt und wird zwischen den beiden Bauteilen 9, 10 eingebracht. Auch hier kann der Schweißzusatzkörper 3 Positioniervorsprünge aufweisen, um diesen besser relativ zu einem der beiden Bauteile 9, 10 positionieren zu können.

Fig. 13 zeigt eine weitere Variante, in welcher der Schweißzusatzkörper 3 zur Verwendung in einem Widerstandsschweißverfahren, wie etwa dem Kondensatorimpulsschweißen oder auch Kondensatorentladungsschweißen ausgeprägt ist. Der Schweißzusatzkörper 3 wird hierbei durch die Verwendung von elektrischem Strom aufgeschmolzen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1, 2, 3, 4, 5, 6, 7, 8, 9, 10, 11, 12, 13 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Schweißbauteilanordnung 1 bzw. des Schweißzusatzes 2 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Schweißbauteilanordnung | 29 | Dicke des Schweißzusatzkörpers |
| 2 | Schweißzusatz | 30 | Druckkraft |
| 3 | Schweißzusatzkörper | 31 | Normalabstand |
| 4 | Mittelachse | 32 | Ausnehmung |
| 5 | erste Anlagefläche | 33 | Klauen |
| 6 | zweite Anlagefläche | 34 | Stumpfstoß |
| 7 | äußere Mantelfläche | 35 | Baugruppe |
| 8 | Zylinderfläche | 36 | Schweißvorrichtung |
| 9 | erstes Bauteil | 37 | Schweißkopf |
| 10 | zweites Bauteil | 38 | Energiestrahl |
| 11 | erste Fügefläche | 39 | äußerer Randabschnitt |
| 12 | zweite Fügefläche | 40 | erster Teilabschnitt erster Bauteil |
| 13 | Querschnitt erste Fügefläche | 41 | zweiter Teilabschnitt zweiter Bauteil |
| 14 | Querschnitt zweite Fügefläche | | |
| 15 | Außenkontur einer Fügefläche | 42 | Innenabschnitt |
| 16 | Außendurchmesser erstes Bauteil | 43 | Haltezapfen |
| 17 | Außendurchmesser zweites Bauteil | 44 | Kühlkanal |
| 18 | Außendurchmesser Schweißzusatzkörper | 45 | Federelement |
| | | 46 | Ausnehmung |
| 19 | Schweißnaht | 47 | Lasche |
| 20 | Innendurchmesser erstes Bauteil | 48 | Torsionsmoment |
| 21 | Innendurchmesser zweites Bauteil | 49 | erster Anlageflächenabschnitt |
| 22 | Zentralabschnitt | 50 | zweiter Anlageflächenabschnitt |
| 23 | Durchbruch | 51 | Winkel Anlageflächen |
| 24 | Innendurchmesser Durchbruch | 52 | T-Stoß |
| 25 | erster Positioniervorsprung | | |
| 26 | Normalrichtung | | |
| 27 | Außendurchmesser erster Positioniervorsprung | | |
| 28 | zweiter Positioniervorsprung | | |

## Patentansprüche

1. Schweißzusatz (2) zur Herstellung einer Baugruppe (35) mittels einer stoffschlüssigen Verbindung durch einen thermischen Fügevorgang zwischen einer ersten Fügefläche (11) eines ersten Bauteiles (9) und einer zweiten Fügefläche (12) eines zweiten Bauteiles (10), insbesondere von metallischen Bauteilen (9), welche Fügeflächen (11) durch einen zwischen diesen ausgebildeten Normalabstand (31) voneinander distanziert angeordnet sind, wobei der Schweißzusatz (2) als geformter Schweißzusatzkörper (3) ausgebildet ist, der eine erste Anlagefläche (5) aufweist, welche an die erste Fügefläche (11) des ersten Bauteiles (9) anlegbar ist und eine zweite Anlagefläche (6) aufweist, welche an die zweite Fügefläche (12) des zweiten Bauteiles (10) anlegbar ist, wodurch mittels des Schweißzusatzkörpers (3) der Normalabstand (31) überbrückbar ist,
**dadurch gekennzeichnet, dass**
der Schweißzusatzkörper (3) durch Sintern hergestellt ist, und, dass der Schweißzusatzkörper (3) zumindest zwei Bereiche (39, 42) mit einer zueinander unterschiedlichen Materialzusammensetzung aufweist und wobei an zumindest einer der Anlageflächen (6) Kühlkanäle (44) ausgebildet sind.

2. Schweißzusatz nach Anspruch 1, **dadurch gekennzeichnet, dass** die beiden Anlageflächen (5, 6) im Wesentlichen parallel zueinander angeordnet sind.

3. Schweißzusatz nach Anspruch 1 oder 2, **dadurch gekennzeichnet, dass** eine äußere Mantelfläche (7) des Schweißzusatzkörpers (3) eine an eine Außenkontur (15) zumindest einer der beiden Fügeflächen (11, 12) angepasste Form aufweist.

4. Schweißzusatz nach einem der vorhergehenden Ansprüche, **dadurch gekennzeichnet, dass** der Schweißzusatzkörper (3) scheiben- oder plattenförmig ausgebildet ist, wobei in einem äußeren Randabschnitt (39) beidseitig die Anlageflächen (5) ausgebildet sind und zumindest in einem Zentralabschnitt (22) ein Durchbruch (23) im Schweißzusatzkörper (3) vorgesehen ist.

5. Schweißzusatz nach einem der vorhergehenden Ansprüche, **dadurch gekennzeichnet, dass** am Schweißzusatzkörper (3) ein erster Positioniervorsprung (25) vorgesehen ist, welcher zumindest die erste Anlagefläche (5) in etwa in Normalrichtung (26) auf die erste Anlagefläche (5) überragt.

6. Schweißzusatz nach einem der vorhergehenden Ansprüche, **dadurch gekennzeichnet, dass** die äußere Mantelfläche (7) als rotationssymmetrische Zylinderfläche (8) ausgebildet ist.

7. Schweißzusatz nach einem der vorhergehenden Ansprüche, **dadurch gekennzeichnet, dass** der Schweißzusatzkörper (3) im Bereich des äußeren Randabschnittes (39) eine erste Materialzusammensetzung mit einer ersten Schmelztemperatur und anschließend an den äußeren Randabschnitt (39) einen Innenabschnitt (42) mit einer zweiten Materialzusammensetzung mit einer zweiten Schmelztemperatur aufweist, wobei die erste Schmelztemperatur bezüglich der zweiten Schmelztemperatur geringer ist.

8. Schweißzusatz nach einem der vorhergehenden Ansprüche, **dadurch gekennzeichnet, dass** im Bereich des äußeren Randabschnittes (39) in die Materialzusammensetzung ein Hilfsmittel, insbesondere ein schlackenbildendes Mittel eingebracht oder auf den äußeren Randabschnitt (39) aufgebracht ist.

9. Schweißzusatz nach einem der vorhergehenden Ansprüche, **dadurch gekennzeichnet, dass** der äußere Randabschnitt (39) durch ein gepresstes Pulver oder mittels eines Bindemittels verbundenes Pulver gebildet ist.

10. Schweißzusatz nach einem der vorhergehenden Ansprüche, **dadurch gekennzeichnet, dass** der Schweißzusatzkörper (3) in einem vom äußeren Randabschnitt (39) distanzierten Innenabschnitt (42) zumindest ein elastisches Federelement (45) aufweist.

11. Schweißzusatz nach Anspruch 10, **dadurch gekennzeichnet, dass** das zumindest eine Federelement (45) lamellenförmig oder gewellt ausgebildet ist.

12. Schweißzusatz nach einem der vorhergehenden Ansprüche, **dadurch gekennzeichnet, dass** an der äußeren Mantelfläche (7) zumindest ein nach außen abstehender Haltezapfen (43) angeordnet ist.

13. Schweißbauteilanordnung (1) umfassend ein erstes Bauteil (9), ein mit diesem zu verschweißendes zweites Bauteil (10), sowie einen Schweißzusatz (2), **dadurch gekennzeichnet, dass** der Schweißzusatz (2) nach einem der vorhergehenden Ansprüche ausgebildet ist.

14. Verfahren zur Herstellung einer Baugruppe (35) mittels eines thermischen Fügevorgangs zum Ausbilden einer stoffschlüssigen Verbindung zwischen einer ersten Fügefläche (11) eines ersten Bauteiles (9) und einer zweiten Fügefläche (12) eines zweiten Bauteiles (10), insbesondere von metallischen Bauteilen (9), insbesondere unter Verwendung eines Schweißzusatzes (2) nach einem der vorhergehenden Ansprüche, wobei das Verfahren folgende Verfahrensschritte aufweist:
- Bereitstellen des ersten Bauteiles (9);
- Bereitstellen eines als geformter Schweißzusatzkörper (3) ausgebildeten Schweißzusatzes (2) mit einer ersten (5) und einer zweiten Anlagefläche (6);
- Positionieren des Schweißzusatzkörpers (3), wobei die erste Anlagefläche (5) des Schweißzusatzkörpers (3) mit der ersten Fügefläche (11) des ersten Bauteiles (9) zur Anlage gebracht wird;
- Positionieren des zweiten Bauteiles (10) relativ bezüglich des ersten Bauteils (9), wobei die zweite Fügefläche (12) des zweiten Bauteiles (10) mit der zweiten Anlagefläche (6) des Schweißzusatzkörpers (3) zur Anlage gebracht wird;
- Durchführen des Schweißvorgangs mit zumindest teilweisem Aufschmelzen des ersten Bauteils (9), des Schweißzusatzkörpers (3) und des zweiten Bauteils (10) durch Einbringen von Wärmeenergie und bilden einer Schweißnaht (19),
**dadurch gekennzeichnet, dass**
der Schweißzusatzkörper (3) durch Sintern hergestellt ist, und,
dass der Schweißzusatzkörper (3) zumindest zwei Bereiche (39, 42) mit einer zueinander unterschiedlichen Materialzusammensetzung aufweist und wobei an zumindest einer der Anlageflächen (6) Kühlkanäle (44) ausgebildet sind.

15. Verfahren zur Herstellung einer Baugruppe (35) nach Anspruch 14, **dadurch gekennzeichnet, dass** die beiden Bauteile (9, 10) vor und/oder während des Schweißvorgangs mit einer gegeneinander gerichteten Druckkraft (30) beaufschlagt und somit aneinander angedrückt werden.

16. Verfahren zur Herstellung einer Baugruppe (35) nach Anspruch 14 oder 15, **dadurch gekennzeichnet, dass** die Wärmeenergie mittels eines Schweißkopfes (37), insbesondere durch Laserschweißen, Plasmaschweißen, Lichtbogenschweißen oder Gasschmelzschweißen eingebracht wird.

17. Verfahren zur Herstellung einer Baugruppe (35) nach einem der Ansprüche 14 bis 16, **dadurch gekennzeichnet, dass** die eingebrachte Wärmeenergie dermaßen bemessen wird, dass während des Schweißvorganges nur ein äußerer Randabschnitt (39) des Schweißzusatzkörpers (3), sowie die jeweils an den äußeren Randabschnitt (39) angrenzenden Teilabschnitte (40, 41) der beiden Bauteile (9, 10) aufgeschmolzen wird.

18. Verfahren zur Herstellung einer Baugruppe (35) nach einem der Ansprüche 14 bis 17, **dadurch gekennzeichnet, dass** die beiden Fügeflächen (11, 12) der Bauteile (9, 10) mit einem zueinander in etwa gleichen Querschnitt (13, 14) ausgebildet werden und unter Ausbildung eines Normalabstandes (31), welcher von dem Schweißzusatzkörper (3) überbrückt wird, in Form eines Stumpfstoßes (34) benachbart nebeneinander angeordnet werden.

## Claims

1. A welding material (2) for producing an assembly (35) by means of a bonded connection formed by a thermal joining operation between a first joining surface (11) of a first component (9) and a second joining surface (12) of a second component (10), in particular of metal components (9), said joining surfaces (11) being arranged spaced apart by a perpendicular distance (31) formed between them, wherein the welding material (2) is configured as a shaped welding material body (3), comprising a first contact surface (5) which may be placed in contact with the first joining surface (11) of the first component (9) and a second contact surface (6) which may be placed in contact with the second joining surface (12) of the second component (10), thus allowing for the perpendicular distance (31) to be bridged by the welding material body (3),
**characterized in that**
the welding material body (3) is produced by means of sintering, and
**in that** the welding material body (3) comprises at least two areas (39, 42) with material compositions differing from one another and wherein cooling channels (44) are formed on at least one of the contact surfaces (6).

2. The welding material according to claim 1, **characterized in that** the two contact surfaces (5, 6) are arranged essentially in parallel to one another.

3. The welding material according to claim 1 or 2, **characterized in that** an outer shell surface (7) of the welding material body (3) comprises a shape adapted to an outer contour (15) of at least one of the two joining surfaces (11, 12).

4. The welding material according to one of the preceding claims, **characterized in that** the welding material body (3) is disc-shaped or plate-shaped, wherein the contact surfaces (5) are provided on both sides in an outer edge section (39) and an orifice (23) in the welding material body (3) is provided at least in one central section (22).

5. The welding material according to one of the preceding claims, **characterized in that** a first positioning projection (25) is provided on the welding material body (3), which projects beyond at least the first contact surface (5) approximately in perpendicular direction (26) to the first contact surface (5).

6. The welding material according to one of the preceding claims, **characterized in that** the outer shell surface (7) is configured as a rotationally symmetrical cylindrical surface (8).

7. The welding material according to one of the preceding claims, **characterized in that** the welding material body (3) comprises a first material composition with a first melting temperature in the area of the outer edge section (39) and adjacent to the outer edge section (39) an inner section (42) with a second material composition with a second melting temperature, wherein the first melting temperature is lower as compared to the second melting temperature.

8. The welding material according to one of the preceding claims, **characterized in that** in the area of the outer edge section (39), an additive, in particular a slag-forming medium, is inserted into the material composition, or applied onto the outer edge section (39).

9. The welding material according to one of the preceding claims, **characterized in that** the outer edge section (39) is formed by a compacted powder or by a powder bound by means of a binding agent.

10. The welding material according to one of the preceding claims, **characterized in that** the welding material body (3) comprises at least one elastic spring element (45) in an inner section (42) distanced from the outer edge section (39).

11. The welding material according to claim 10, **characterized in that** the at least one spring element (45) is lamelliform or corrugated.

12. The welding material according to one of the preceding claims, **characterized in that** at least one outwardly projecting retaining pin (43) is arranged on the outer shell surface (7).

13. A welding component arrangement (1) comprising a first component (9), a second component (10) to be welded to it, as well as a welding material (2), **characterized in that** the welding material (2) is designed according to one of the preceding claims.

14. A method for producing an assembly (35) by means of a thermal joining operation for forming a bonded connection between a first joining surface (11) of a first component (9) and a second joining surface (12) of a second component (10), in particular of metal components (9), in particular using a welding material (2) according to one of the preceding claims, wherein the method comprises the following method steps:
- providing the first component (9);
- providing a welding material (2) configured as a shaped welding material body (3) with a first (5) and a second contact surface (6);
- positioning the welding material body (3), wherein the first contact surface (5) of the welding material body (3) is brought into contact with the first joining surface (11) of the first component (9);
- positioning the second component (10) relative to the first component (9), wherein the second joining surface (12) of the second component (10) is brought into contact with the second contact surface (6) of the welding material body (3);
- performing the welding process with at least partial melting of the first component (9), the welding material body (3) and the second component (10) by application of thermal energy and formation of a weld seam (19),
**characterized in that**
the welding material body (3) is produced by sintering, and
**in that** the welding material body (3) comprises at least two areas (39, 42) with material compositions differing from one another and wherein cooling channels (44) are provided on at least one of the contact surfaces (6).

15. The method for producing an assembly (35) according to claim 14, **characterized in that** before and/or during the welding process, a compression force (30) directed against each other is applied to the two components (9, 10) and these are thus pressed together.

16. The method for producing an assembly (35) according to claim 14 or 15, **characterized in that** the thermal energy is applied by means of a welding head (37), in particular by laser welding, plasma welding, arc welding or gas fusion welding.

17. The method for producing an assembly (35) according to one of claims 14 through 16, **characterized in that** the applied thermal energy is measured such that during the welding process, only an outer edge section (39) of the welding material body (3) as well as the partial sections (40, 41) of the two components (9, 10) respectively adjoining the outer edge section (39) are melted.

18. The method for producing an assembly (35) according to one of claims 14 through 17, **characterized in that** the two joining surfaces (11, 12) of the components (9, 10) are formed with cross sections (13, 14) approximately equal to one another and are arranged adjacent to one another forming a perpendicular distance (31), which is bridged by the welding material body (3), in form of a butt joint (34).

## Revendications

1. Additif de soudure (2) pour la fabrication d'un sous-ensemble (35) au moyen d'une liaison par combinaison de matière à l'aide d'un processus d'assemblage entre une première surface d'assemblage (11) d'un premier composant (9) et une deuxième surface d'assemblage (12) d'un deuxième composant (10), plus particulièrement de composants métalliques (9), ces surfaces d'assemblages (11) étant écartées l'une de l'autre d'une distance normale (31) établie entre elles et l'additif de soudure (2) étant conçu comme un corps supplémentaire de soudure (3), qui comprend une première surface d'appui (5), qui peut être appuyée contre la première surface d'assemblage (11) du premier composant (9) et une deuxième surface d'appui (6) qui peut être appuyée contre la deuxième surface d'assemblage (12) du deuxième composant (10), ce qui permet de combler la distance normale (31) au moyen du corps supplémentaire de soudure (3),
**caractérisé en ce que**
le corps supplémentaire de soudure (3) est fabriqué par frittage et **en ce que** le corps supplémentaire de soudure (3) comprend au moins deux zones (39, 42) avec des compositions de matériau différentes entre elles et des canaux de refroidissement (44) étant réalisés sur au moins une des surfaces d'appui (6).

2. Additif de soudure selon la revendication 1, **caractérisé en ce que** les deux surfaces d'appui (5, 6) sont disposées de manière globalement parallèle entre elles.

3. Additif de soudure selon la revendication 1 ou 2, **caractérisé en ce qu'**une surface d'enveloppe externe (7) du corps supplémentaire de soudure (3) présente une forme adaptée à un contour externe (15) d'au moins une des deux surfaces d'assemblage (11, 12).

4. Additif de soudure selon l'une des revendications précédentes, **caractérisé en ce que** le corps supplémentaire de soudure (3) présente la forme d'un disque ou d'une plaque, les surfaces d'appui (5) étant réalisées des deux côtés dans une portion de bord externe (39) et une percée (23) étant prévue dans le corps supplémentaire de soudure (3) au moins dans une portion centrale (22).

5. Additif de soudure selon l'une des revendications précédentes, **caractérisé en ce que**, sur le corps supplémentaire de soudure (3), est prévue une saillie de positionnement (25) qui dépasse au moins de la première surface d'appui (5) approximativement dans une direction normale (26) par rapport à la première surface d'appui (5).

6. Additif de soudure selon l'une des revendications précédentes, **caractérisé en ce que** la surface d'enveloppe externe (7) est conçue comme une surface cylindrique (8) à symétrie de rotation.

7. Additif de soudure selon l'une des revendications précédentes, **caractérisé en ce que** le corps supplémentaire de soudure (3) présente, au niveau de la portion de bord externe (39), une première composition de matériau avec une première température de fusion puis, sur la portion de bord externe (39), une portion interne (42) avec une deuxième composition de matériau avec une deuxième température de fusion, la première température de fusion étant inférieure à la deuxième température de fusion.

8. Additif de soudure selon l'une des revendications précédentes, **caractérisé en ce que**, au niveau de la portion de bord externe (39), dans la composition du matériau, est intégré, ou appliqué sur la portion de bord externe (39), un produit auxiliaire, plus particulièrement un produit formant des scories.

9. Additif de soudure selon l'une des revendications précédentes, **caractérisé en ce que** la portion de bord externe (39) est constituée d'une poudre compressée ou d'une poudre liée à l'aide d'un liant.

10. Additif de soudure selon l'une des revendications précédentes, **caractérisé en ce que** le corps supplémentaire de soudure (3) comprend, dans une portion interne (42) éloignée de la portion de bord externe (39), au moins un élément à ressort élastique (45).

11. Additif de soudure selon la revendication 10, **caractérisé en ce que** l'au moins un élément à ressort (45) est conçu sous la forme de lamelles ou de manière ondulée.

12. Additif de soudure selon l'une des revendications précédentes, **caractérisé en ce que**, sur la surface d'enveloppe externe (7) est disposé au moins un pivot de maintien (43) dépassant vers l'extérieur.

13. Disposition de composant soudé (1) comprenant un premier composant (9), un deuxième composant (10) soudé à celui-ci, ainsi qu'un additif de soudure (2), **caractérisé en ce que** l'additif de soudure (2) est conçu selon l'une des revendications précédentes.

14. Procédé de fabrication d'un sous-ensemble (35) au moyen d'un processus d'assemblage thermique pour la formation d'une liaison par combinaison de matière entre une première surface d'assemblage (11) d'un premier composant (9) et une deuxième surface d'assemblage (12) d'un deuxième composant (10), plus particulièrement de composants métalliques (9), plus particulièrement à l'aide d'un additif de soudure (2) selon l'une des revendications précédentes, le procédé comprenant les étapes suivantes :
- mise à disposition du premier composant (9) ;
- mise à disposition d'un additif de soudure (2) conçu comme un corps supplémentaire de soudure (3) formé, avec une première (5) et une deuxième (6) surfaces d'appui ;
- positionnement du corps supplémentaire de soudure (3), la première surface d'appui (5) du corps supplémentaire de soudure (3) étant mis en appui avec la première surface d'assemblage (11) du premier composant (9) ;
- positionnement du deuxième composant (10) par rapport au premier composant (9), la deuxième surface d'assemblage (12) du deuxième composant (10) étant mise en appui avec la deuxième surface d'assemblage (6) du corps supplémentaire de soudure (3) ;
- réalisation du processus de soudure avec une fusion au moins partielle du premier composant (9), du corps supplémentaire de soudure (3) et du deuxième composant (10) par apport d'énergie thermique et formation d'un cordon de soudure (19),
**caractérisé en ce que** le corps supplémentaire de soudure (3) est fabriqué par frittage et **en ce que** le corps supplémentaire de soudure (3) comprend au moins deux zones (39, 42) avec des compositions de matériaux différentes entre elles, et des canaux de refroidissement (44) étant réalisé sur au moins une des surfaces d'appui (6).

15. Procédé de fabrication d'un sous-ensemble (35) selon la revendication 14, **caractérisé en ce que** les deux composants (9, 10) sont soumis à une force de pression (30) dirigée l'un contre l'autre et donc comprimés l'un contre l'autre avant et/ou pendant le processus de soudure.

16. Procédé de fabrication d'un sous-ensemble (35) selon la revendication 14 ou 15, **caractérisé en ce que** l'énergie thermique est apportée au moyen d'une tête de soudure (37), plus particulièrement par soudure au laser, soudure au plasma, soudure à arc électrique ou par soudure autogène.

17. Procédé de fabrication d'un sous-ensemble (35) selon l'une des revendications 14 à 16, **caractérisé en ce que** l'énergie thermique apportée est telle que, pendant le processus de soudure, seule une portion de bord externe (39) du corps supplémentaire de soudure (3), ainsi que les parties (40, 41), adjacentes chacune à la portion de bord externe (39), des deux composants (9, 10), est fondue.

18. Procédé de fabrication d'un sous-ensemble (35) selon l'une des revendications 14 à 17, **caractérisé en ce que** les deux surfaces d'assemblage (11, 12) des composants (9, 10) sont réalisées avec des sections transversales (13, 14) approximativement identiques et sont disposées l'une à côté de l'autre en formant une distance normale (31), qui est comblée par le corps supplémentaire de soudure (3), sous la forme d'un joint bout-à-bout (34).
